# EUROPÄISCHE PATENTSCHRIFT

(11) **EP 3 656 038 B1**
(45) Veröffentlichungstag und Bekanntmachung des Hinweises auf die Patenterteilung: **02.06.2021**
(21) Anmeldenummer: 18769101.9
(22) Anmeldetag: 04.09.2018
(51) Int. Cl.: H02K 1/24, H02K 1/27, H02K 1/02

(54) **MODIFIZIERTER LÄUFER EINER RELUKTANZMASCHINE ZUR DREHMOMENTERHÖHUNG**
MODIFIED ROTOR OF A RELUCTANCE MACHINE FOR TORQUE INCREASE
ROTOR D'UNE MACHINE À RELUCTANCE MODIFIÉ PERMETTANT D'AUGMENTER LES COUPLES DE ROTATION

(30) Priorität: 20.10.2017 EP 17197576
(43) Veröffentlichungstag der Anmeldung: 27.05.2020
(73) Patentinhaber: Siemens Aktiengesellschaft, 80333 München (DE)
(72) Erfinder: SCHUNK, Holger, 97461 Lendershausen (DE)
(86) Internationale Anmeldenummer: PCT/EP2018/073691
(87) Internationale Veröffentlichungsnummer: WO 2019/076523

(56) Entgegenhaltungen:
- EP-A1- 2 775 591
- EP-A1- 3 051 672
- WO-A1-2014/003729
- DE-A1-102010 044 046
- GB-A- 1 114 562

## Beschreibung

Die Erfindung betrifft eine rotatorische dynamoelektrische Reluktanzmaschine, mit einer Rotationsrichtung um eine Rotationsachse, wobei die rotatorische dynamoelektrische Reluktanzmaschine einen Läufer aufweist, der in Rotationsrichtung betrachtet Bereiche unterschiedlicher magnetischer Widerstände aufweist, wobei von diesen Bereichen Bereiche mit Material von einer ersten magnetischen Leitfähigkeit µr > 50 Pole mit der Polzahl 2p des Läufers ausbilden, wobei diese Bereiche an amagnetischen Stoff angrenzen, wobei sich die Polteilung in Rotationsrichtung betrachtet von der Mitte eines Bereichs mit einer gegenüber der ersten magnetischen Leitfähigkeit geringeren zweiten magnetischen Leitfähigkeit µr < 5 zur Mitte des nächsten Bereichs mit der zweiten magnetischen Leitfähigkeit erstreckt, wobei eine Breite der Bereiche mit der zweiten magnetischen Leitfähigkeit in Rotationsrichtung betrachtet zumindest an einer Oberfläche des Läufers zwischen 1% und 50% der Polteilung beträgt, wobei eine radiale Tiefe eines Pols wenigstens abschnittsweise mehr als 10% einer Länge eines Kreisbogens der Polteilung entspricht.

Die EP 2 775 591 A1 offenbart einen Läufer einer rotatorischen dynamoelektrischen Reluktanzmaschine, mit einer Rotationsrichtung um eine Rotationsachse, wobei der Läufer in Rotationsrichtung betrachtet Bereiche unterschiedlicher magnetischer Widerstände aufweist, wobei Bereiche mit Material von einer guten magnetischen Leitfähigkeit (µr > 50) Pole mit der Polzahl 2p des Läufers ausbilden, wobei diese Bereiche von amagnetischem Stoff (µr < 5) umgeben sind, wobei sich die Polteilung in Rotationsrichtung betrachtet von der Mitte eines amagnetischen Bereichs zur Mitte des nächsten amagnetischen Bereichs erstreckt.

Der Nachteil des offenbarten Läufers der rotatorischen dynamoelektrischen Reluktanzmaschine liegt im geringen Drehmoment der Reluktanzmaschine.

Aus der WO 2014/003729 A1 ist eine rotierende elektrische Maschine bekannt mit einem Stator und einem Rotor. Der Rotor weist mindestens einen Permanentmagneten auf, der in einem d-Achsen-Magnetpfad angeordnet ist. Der Rotor weist einen Magnetspaltteil auf, der zwischen dem im d-Achsen-Magnetpfad eines Pols angeordneten Permanentmagneten und einem benachbarten Magneten mit einer anderen Polarität angeordnet ist, so dass sich ein d-Achsen-Magnetfluss bildet einen d-Achsen-Bypass, der durch einen anderen Bereich als den Permanentmagneten verläuft. Der d-Achsen-Bypass liefert einen magnetischen Widerstand in einer Richtung der d-Achse, die in einer Richtung der q-Achse, die orthogonal zu dem d-Achsen-Widerstand ist, unter einem magnetischen Widerstand liegt.

Die DE 10 2010 044046 A1 betrifft einen Rotor einer Reluktanzmaschine, umfassend ein Blechpaket, wobei das Blechpaket Flusssperren aufweist, die eine gerade Anzahl von ausgeprägten magnetischen Polen ausbilden und die q-Achse des Rotors definieren, wobei bei dem Rotor Permanentmagnete vorgesehen sind, wobei in der d-Achse des Rotors Ausnehmungen vorgesehen sind, in denen die Permanentmagnete angeordnet sind.

Die GB 1 114 562 A betrifft einen Reluktanzmotor mit einem Rotor, der Stapel magnetisch anisotroper Bleche enthält, die allgemein parallel zur Maschinenachse angeordnet sind und in den Wegen des magnetischen Flusses zwischen den Polen des ein- oder mehrphasig gewickelten Stators liegen. Die Lamellen werden entweder durch radiale Bolzen oder durch Umschließen der Enden und des Umfangs des Rotors mit Druckgussmaterial befestigt, das auch den Raum zwischen den Lamellen ausfüllt.

Die WO 2004/070918 A1 betrifft einen Permanentmagnet-Synchronmotor mit modifiziertem Rotor, um ein Ausweichverhältnis Ld/Lq von mehr als eins zu erhalten.

Der Erfindung liegt daher die Aufgabe zugrunde, das Drehmoment einer derartigen Reluktanzmaschine zu verbessern.

Ferner gelingt die Lösung der Aufgabe durch eine rotatorische dynamoelektrische Reluktanzmaschine mit den im Anspruch 1 angegebenen Merkmalen.

Vorzugsweise gilt für die erste magnetische Leitfähigkeit µr > 500.

Materialien mit der ersten magnetischen Leitfähigkeit können beispielsweise Baustahl, Elektroblech oder eine Eisen-Cobalt-Legierung sein.

Besonders gut eignen sich Materialien mit einer magnetischen Leitfähigkeit von µr > 2000, insbesondere 3000 < µr < 4000.

Materialien mit der geringeren zweiten magnetischen Leitfähigkeit können beispielsweise rostfreier Stahl, Luft, Aluminium, Kupfer, Holz, Gummi oder Kunststoff sein.

Vorteilhaft sind die Materialien mit der geringeren zweiten magnetischen Leitfähigkeit auch elektrisch nicht leitend wie beispielsweise Kunststoff.

Ein Vorteil des derart ausgestalteten Läufers ist, dass das bei Reluktanzmaschinen üblicherweise geringe Drehmoment bzw. die üblicherweise geringe Drehmomentkonstante erhöht werden.

Ein weiterer Vorteil des derart ausgestalteten Läufers ist, dass nur wenige ohmsche Verluste anfallen. Zudem fallen nur wenige Eisenverluste an. Der beschriebene Läufer weist also eine hohe Energieeffizienz auf.

Ein weiterer Vorteil der Erfindung ist, dass elektrische Maschinen, deren Rotationsbewegung auf dem Reluktanzprinzip beruht, kostengünstig sind.

Der Läufer weist erfindungsgemäß permanentmagnetisches Material auf. Dies dient der Erhöhung des Drehmoments. Der Bereich mit der zweiten magnetischen Leitfähigkeit kann hierbei beispielsweise gänzlich aus permanentmagnetischem Material bestehen oder mit einzelnen Permanentmagneten bestückt sein. Beispielsweise kann ein Blechpaket mit Permanentmagneten bestückt sein.

Als permanentmagnetisches Material werden vorzugsweise Seltenerdmagnete, beispielsweise Neodym-Eisen-Bor und/oder Samarium-Cobalt, eingesetzt. Als permanentmagnetisches Material können jedoch auch Stahl, Aluminium-Nickel-Cobalt, Bismanol und/oder Ferrite eingesetzt werden. Zudem ist auch der Einsatz von Kunststoffmagnetmaterial als permanentmagnetisches Material möglich.

Erfindungsgemäß weist das permanentmagnetische Material eine radiale Magnetisierung auf. Dies dient einer Erhöhung einer magnetischen Feldstärke im Luftspalt.

Die radiale Magnetisierung des permanentmagnetischen Materials wirkt sich positiv auf die Erhöhung des Drehmoments aus. Das Drehmoment kann hierbei um einen Faktor 1,5 - 2 erhöht werden.

In einer weiteren vorteilhaften Ausführung der Erfindung erstreckt sich ein weiterer Bereich aufweisend ein Material einer ersten oder dritten magnetischen Leitfähigkeit µr > 50 im Wesentlichen konzentrisch zur Rotationsachse zur Erreichung eines magnetischen Rückschlusses.

Vorzugsweise gilt für die erste oder dritte magnetische Leitfähigkeit µr > 500.

Dies dient vorzugsweise einer Optimierung eines Wirkungsgrades der Reluktanzmaschine, da die magnetische Feldstärke im Luftspalt erhöht wird. So wird bei gleichem Drehmoment weniger Strom benötigt bzw. auch bei gleichem Strom ein höheres Drehmoment erreicht.

Materialien mit der dritten magnetischen Leitfähigkeit können beispielsweise Baustahl, Elektroblech oder eine Eisen-Cobalt-Legierung sein.

Besonders gut eignen sich Materialien mit einer magnetischen Leitfähigkeit von µr > 2000.

Der magnetische Rückschluss kann jedoch auch über eine Welle des Läufers erreicht werden.

In einer weiteren vorteilhaften Ausführung der Erfindung sind die Bereiche mit wenigstens einem Verbindungselement verbunden.

Das Verbindungselement dient einer Verbindung von wenigstens zwei der genannten Bereiche miteinander.

Das Verbindungselement kann aus wenigstens einer Verbindungsart wie beispielsweise Kleben, Schweißen, Löten, Hartlöten und/oder Bandagieren resultieren.

Das Verbindungselement kann auch als Bolzen, Stift, Niete und/oder Nagel ausgebildet sein und weist vorzugsweise ein Metall und/oder ein anderes Material auf.

In einer weiteren vorteilhaften Ausführung der Erfindung ist das Verbindungselement als Schraube ausgebildet.

Ein als Schraube ausgeführtes Verbindungselement ist aufgrund einer einfachen Montierbarkeit von Vorteil.

Vorzugsweise wird als Material für die Schraube ein magnetisch leitfähiges Material verwendet. Jedoch können sämtliche schraubentypischen Materialien verwendet werden.

Vorzugsweise verbindet wenigstens eine Schraube einen Bereich mit Material von der ersten magnetischen Leitfähigkeit mit der Welle.

Vorzugsweise verbindet wenigstens eine Schraube einen Bereich mit Material von der ersten magnetischen Leitfähigkeit mit einem weiteren Bereich mit Material von der ersten und/oder dritten magnetischen Leitfähigkeit und mit der Welle.

Vorzugsweise verbindet wenigstens eine Schraube einen Bereich mit Material von der ersten magnetischen Leitfähigkeit mit einem Bereich mit Material von der zweiten magnetischen Leitfähigkeit und mit einem weiteren Bereich mit Material von der ersten und/oder dritten magnetischen Leitfähigkeit und mit der Welle.

Vorzugsweise verbindet jeweils eine Schraube jeden Bereich mit Material von der ersten magnetischen Leitfähigkeit mit der Welle.

Vorzugsweise verbindet jeweils eine Schraube jeden Bereich mit Material von der ersten magnetischen Leitfähigkeit mit einem, vorzugsweise darunterliegenden, weiteren Bereich mit Material von der ersten und/oder dritten magnetischen Leitfähigkeit und mit der Welle.

Vorzugsweise verbindet jeweils eine Schraube jeden Bereich mit Material von der ersten magnetischen Leitfähigkeit mit einem, vorzugsweise darunterliegenden, Bereich mit Material von der zweiten magnetischen Leitfähigkeit und mit einem, vorzugsweise darunterliegenden, weiteren Bereich mit Material von der ersten und/oder dritten magnetischen Leitfähigkeit und mit der Welle.

Vorzugsweise ist jede Schraube im Wesentlichen mittig zwischen einem vorderen axialen Ende und einem hinteren axialen Ende der Welle angeordnet.

Vorzugsweise ist die Welle als Hohlwelle ausgeführt.

In einer weiteren vorteilhaften Ausführung der Erfindung umfasst das Verbindungselement zwei Schrauben.

Vorzugsweise verbinden genau zwei Schrauben einen Bereich mit Material von der ersten magnetischen Leitfähigkeit mit der Welle.

Vorzugsweise verbinden genau zwei Schrauben einen Bereich mit Material von der ersten magnetischen Leitfähigkeit mit einem weiteren Bereich mit Material von der ersten und/oder dritten magnetischen Leitfähigkeit und mit der Welle.

Vorzugsweise verbinden genau zwei Schrauben einen Bereich mit Material von der ersten magnetischen Leitfähigkeit mit einem Bereich mit Material von der zweiten magnetischen Leitfähigkeit und mit einem weiteren Bereich mit Material von der ersten und/oder dritten magnetischen Leitfähigkeit und mit der Welle.

Vorzugsweise verbinden jeweils genau zwei Schrauben jeden Bereich mit Material von der ersten magnetischen Leitfähigkeit mit der Welle.

Vorzugsweise verbinden jeweils genau zwei Schrauben jeden Bereich mit Material von der ersten magnetischen Leitfähigkeit mit einem, vorzugsweise darunterliegenden, weiteren Bereich mit Material von der ersten und/oder dritten magnetischen Leitfähigkeit und mit der Welle.

Vorzugsweise verbinden jeweils genau zwei Schrauben jeden Bereich mit Material von der ersten magnetischen Leitfähigkeit mit einem, vorzugsweise darunterliegenden, Bereich mit Material von der zweiten magnetischen Leitfähigkeit und mit einem, vorzugsweise darunterliegenden, weiteren Bereich mit Material von der ersten und/oder dritten magnetischen Leitfähigkeit und mit der Welle.

Vorzugsweise ist eine der zwei Schrauben im Wesentlichen am vorderen axialen Ende der Welle angeordnet und die andere der zwei Schrauben im Wesentlichen am hinteren axialen Ende der Welle angeordnet.

In einer weiteren vorteilhaften Ausführung der Erfindung sind die Bereiche mittels Stoffschluss verbunden.

Die Verbindung kann aus wenigstens einer Verbindungsart wie beispielsweise Kleben, Schweißen, Löten und/oder Hartlöten resultieren.

Die genannten Verbindungsarten ermöglichen eine stoffschlüssige Verbindung.

In einer weiteren vorteilhaften Ausführung der Erfindung sind die Bereiche mittels Kraftschluss verbunden.

Die Verbindung kann aus wenigstens einer Verbindungsart wie beispielsweise Bandagieren resultieren.

Die genannte Verbindungsart ermöglicht eine kraftschlüssige Verbindung.

In einer weiteren vorteilhaften Ausführung der Erfindung sind die Bereiche parallel zur Rotationsachse angeordnet.

In einer weiteren vorteilhaften Ausführung der Erfindung sind die Bereiche bezüglich der Rotationsachse geschrägt angeordnet.

Diese Anordnung bietet den Vorteil, dass dadurch eine Welligkeit und/oder ein Rastmoment des Läufers verringert werden können.

Die beschriebene Ausführung des Läufers hat den Vorteil, dass eine rotatorische dynamoelektrische Reluktanzmaschine mit einem derartigen Läufer zwei Drehmomentmaxima besitzt. Ein erstes Drehmomentmaximum rührt im Wesentlichen von der Reluktanzkraft der Reluktanzmaschine her. Ein zweites Drehmomentmaximum rührt im Wesentlichen von der Lorentzkraft her, die von einem Läufer-Magnetfeld - der Läufer weist wie oben beschrieben permanentmagnetisches Material auf - auf ein Ständerwicklungssystem wirkt.

Vorzugsweise wirken immer beide Kräfte, jedoch phasenverschoben. Auf diese Weise entstehen die Drehmomentmaxima.

Somit besitzt die rotatorische dynamoelektrische Reluktanzmaschine mit einem derartigen Läufer zwei Drehmomentkonstanten, die über einen Bestromungswinkel, vorzugsweise mittels eines der rotatorischen dynamoelektrischen Reluktanzmaschine vorgeschalteten Umrichters, eingestellt werden können.

Die Erfindung bietet den Vorteil, dass zwei parallele Magnetkreise erzeugt werden können und diese elektromagnetisch voneinander getrennt werden können. Ein erster Magnetkreis umfasst hierbei den Ständer und wenigstens ein Flussleitstück und nutzt die Reluktanzkraft. Ein zweiter Magnetkreis umfasst den Ständer, permanentmagnetisches Material und einen optionalen Bereich zur Erreichung eines magnetischen Rückschlusses - beispielsweise eine Rückschlusswelle - und nutzt die Lorentzkraft.

Auf diese Weise können sich die Magnetkreise ergänzen und in Summe ein größeres Drehmoment bei gleichem Strom liefern.

In einer weiteren vorteilhaften Ausführung der Erfindung ist der Läufer als Läufermodul ausgeführt. Wenigstens zwei zusammengefügte Läufermodule ergeben den Läufer. Hierbei können die Läufermodule auch in einer Art zusammengefügt werden, die einer bezüglich der Rotationsachse geschrägten Anordnung der Bereiche entspricht.

Besonders gut eingesetzt werden kann eine rotatorische dynamoelektrische Reluktanzmaschine mit einem derartigen Läufer in der Verfahrenstechnik mit Pumpen, Lüftern, Kompressoren, Mischern und Zentrifugen, in der Fördertechnik sowie auch im Maschinenbau. Generell ist die rotatorische dynamoelektrische Reluktanzmaschine mit einem derartigen Läufer universell einsetzbar.

Im Folgenden wird die Erfindung anhand der in den Figuren dargestellten Ausführungsbeispiele näher beschrieben und erläutert. Es zeigen:
FIG 1 den Stand der Technik,
FIG 2 eine erfindungsgemäße Ausgestaltung einer Reluktanzmaschine mit einem Läufer zur Erhöhung eines Drehmoments,
FIG 3 eine Ausgestaltung des Läufers mit einem magnetischen Rückschluss über eine Welle,
FIG 4 eine Ausgestaltung des Läufers mit einem vergrößerten Bereich mit einem Material mit einer geringeren zweiten magnetischen Leitfähigkeit,
FIG 5 eine Ausgestaltung des Läufers, wobei die Bereiche mit jeweils einer Schraube pro Pol mit der Welle verbunden sind,
FIG 6 eine Ausgestaltung des Läufers, wobei die Bereiche mit zwei Schrauben pro Pol mit der Welle verbunden sind.

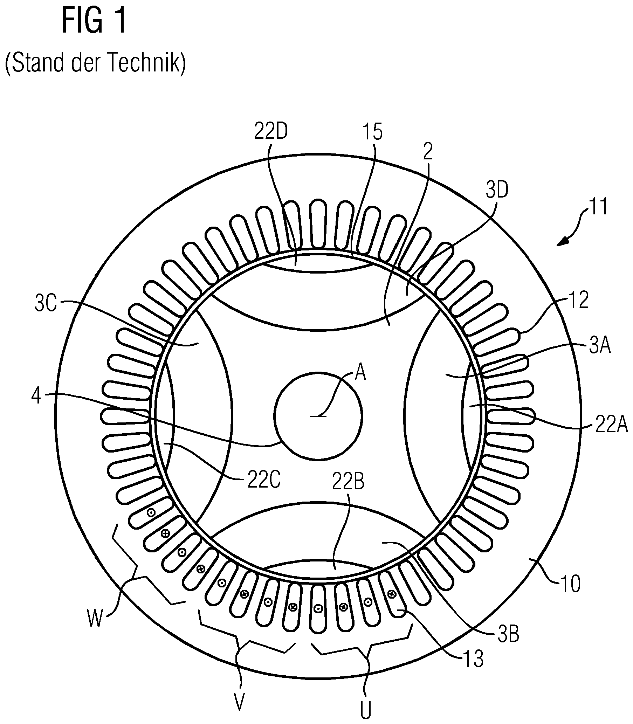

FIG 1 zeigt den Stand der Technik. Die Figur zeigt eine Reluktanzmaschine 11 mit einem Bereich 2 sowie Bereichen 3A, 3B, 3C und 3D. Die Bereiche 3A bis 3D weisen ein Material von einer ersten magnetischen Leitfähigkeit (µr > 50) auf und bilden Pole mit der Polzahl 2p des Läufers aus.

Die Bereiche 3A bis 3D grenzen an amagnetischen Stoff (µr < 5) an.

Der Bereich 2 weist ein Material mit einer gegenüber der ersten magnetischen Leitfähigkeit geringeren zweiten magnetischen Leitfähigkeit (µr < 5) auf. Der Bereich 2 grenzt an eine Welle 4.

Die Bereiche 3A bis 3D grenzen - in Rotationsrichtung um die Rotationsachse A betrachtet - an den Bereich 2.

Ferner grenzen diese auch an einen Luftspalt 15 sowie an einen amagnetischen Stoff in Segmentabschnitten 22A, 22B, 22C und 22D.

Um einen Pumpeffekt, der sich bei geometrisch unrunden Läufern einstellt, oder auch Geräusche zu vermeiden, sind die Segmentabschnitte 22A bis 22D mit amagnetischem Stoff aufgefüllt. Die Segmentabschnitte 22A bis 22D mit amagnetischem Stoff sind mit geeigneten Mitteln, beispielsweise mittels Bandagen oder stoffschlüssigen Verbindungen, mit dem jeweiligen magnetischen Bereich 3A bis 3D verbunden.

Ein Ständer 10 weist ein Ständerwicklungssystem 13 in Nuten 12 mit den drei Phasen U, V und W auf.

Diese Reluktanzmaschine wird auch als inverse Reluktanzmaschine bezeichnet.

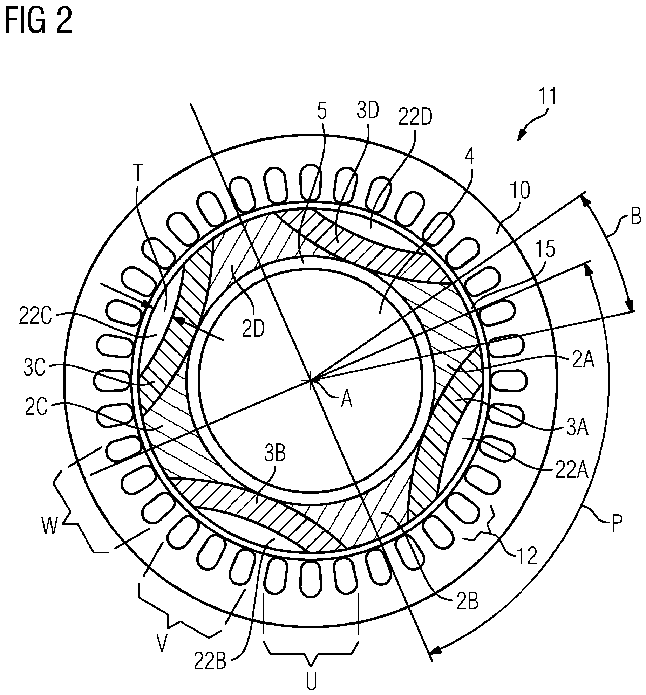

FIG 2 zeigt eine erfindungsgemäße Ausgestaltung einer Reluktanzmaschine 11 mit einem Läufer zur Erhöhung eines Drehmoments.

In FIG 1 beschriebene Bezugszeichen sind auch für FIG 2 und alle folgenden Figuren gültig und werden aus Übersichtsgründen nicht erneut erläutert. Der in FIG 1 gezeigte Bereich 2 ist aufgrund anderer, aber jedoch auch möglicher Bereichsverhältnisse in mehrere Bereiche 2A, 2B, 2C und 2D geteilt.

In FIG 2 wird zudem eine Polteilung P deutlich. Diese reicht in Rotationsrichtung betrachtet in der Figur von der Mitte eines Bereichs 2A mit einer gegenüber der ersten magnetischen Leitfähigkeit geringeren zweiten magnetischen Leitfähigkeit zur Mitte des nächsten Bereichs 2B mit der zweiten magnetischen Leitfähigkeit.

Erfindungsgemäß weisen die Bereiche 2A bis 2D permanentmagnetisches Material zur Erhöhung des Drehmoments der Reluktanzmaschine 11 auf. Die Bereiche 2A bis 2D können hierbei beispielsweise gänzlich aus permanentmagnetischem Material bestehen oder mit einzelnen Permanentmagneten bestückt sein. Beispielsweise kann ein Blechpaket mit Permanentmagneten bestückt sein.

Eine Breite B eines jeden Bereichs 2A bis 2D mit der zweiten magnetischen Leitfähigkeit beträgt in Rotationsrichtung betrachtet zumindest an einer Oberfläche des Läufers zwischen 1% und 50% der Polteilung. Die Breite B beträgt vorzugsweise zwischen 10% und 30% der Polteilung.

Die FIG 2 zeigt zudem einen weiteren Bereich 5, der ein Material einer ersten oder dritten magnetischen Leitfähigkeit aufweist. Der Bereich 5 erstreckt sich im Wesentlichen konzentrisch zur Rotationsachse A zur Erreichung eines magnetischen Rückschlusses. In der Figur grenzt der Bereich 5 an die Welle 4 an.

Die Figur zeigt ferner eine radiale Tiefe T eines Pols, die wenigstens abschnittsweise mehr als 10% einer Länge eines Kreisbogens der Polteilung P entspricht.

Der Ständer weist vorzugsweise eine ein-, zwei- oder mehrsträngige Drehstromwicklung auf. Vorzugsweise wird hierfür eine passende Ganzlochwicklung verwendet. Jedoch ist auch eine Bruchlochwicklung denkbar.

Die Figur zeigt eine Weiterentwicklung der inversen Reluktanzmaschine aus FIG 1.

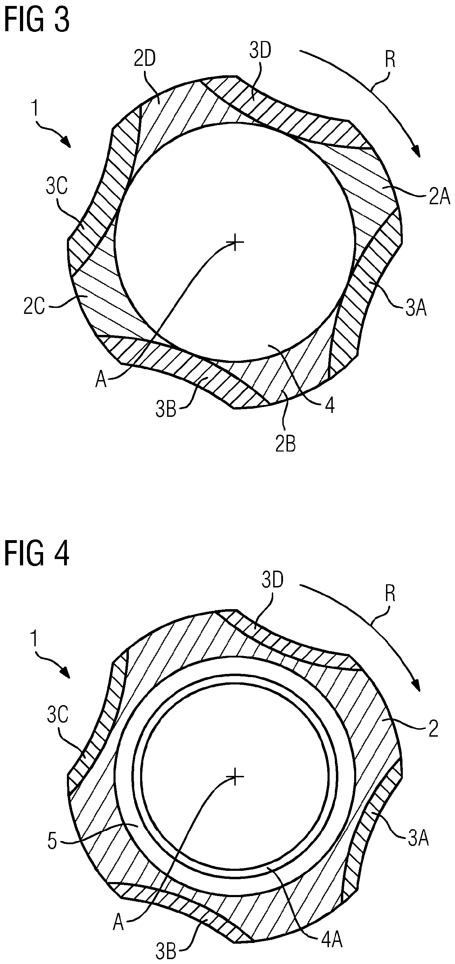

In FIG 2 beschriebene Bezugszeichen sind auch für FIG 3 und alle folgenden Figuren gültig und werden aus Übersichtsgründen nicht erneut erläutert.

FIG 3 zeigt eine Ausgestaltung des Läufers 1 mit einem magnetischen Rückschluss über eine Welle 4.

Die Bereiche 3A bis 3D mit Material von einer ersten magnetischen Leitfähigkeit bilden Pole mit der Polzahl 2p des Läufers 1 aus und grenzen in der Figur unmittelbar an die Welle 4. Die Rotationsrichtung R des Läufers 1 ist in der Figur rechtsdrehend. Jedoch ist auch eine linksdrehende Rotationsrichtung denkbar.

Erfindungsgemäß weisen die Bereiche 2A bis 2D permanentmagnetisches Material zur Erhöhung des Drehmoments der Reluktanzmaschine 11 auf.

In FIG 3 beschriebene Bezugszeichen sind auch für FIG 4 und alle folgenden Figuren gültig und werden aus Übersichtsgründen nicht erneut erläutert.

FIG 4 zeigt eine Ausgestaltung des Läufers 1 mit einem zusammenhängenden Bereich 2 mit einem Material mit einer geringeren zweiten magnetischen Leitfähigkeit.

Erfindungsgemäß weist der Bereich 2 permanentmagnetisches Material zur Erhöhung des Drehmoments der Reluktanzmaschine 11 auf.

Die Bereiche 3A bis 3D sind in der Figur schmaler als in FIG 3. Die Figur zeigt zudem den Bereich 5, der ein Material einer ersten und/oder dritten magnetischen Leitfähigkeit aufweist. Der Bereich 5 erstreckt sich im Wesentlichen konzentrisch zur Rotationsachse A zur Erreichung eines magnetischen Rückschlusses und grenzt in der Figur an die als Hohlwelle 4A ausgeführte Welle an.

Dies bietet den Vorteil, dass ein höheres Drehmoment durch ein höheres magnetisches Feld im Luftspalt erreicht wird.

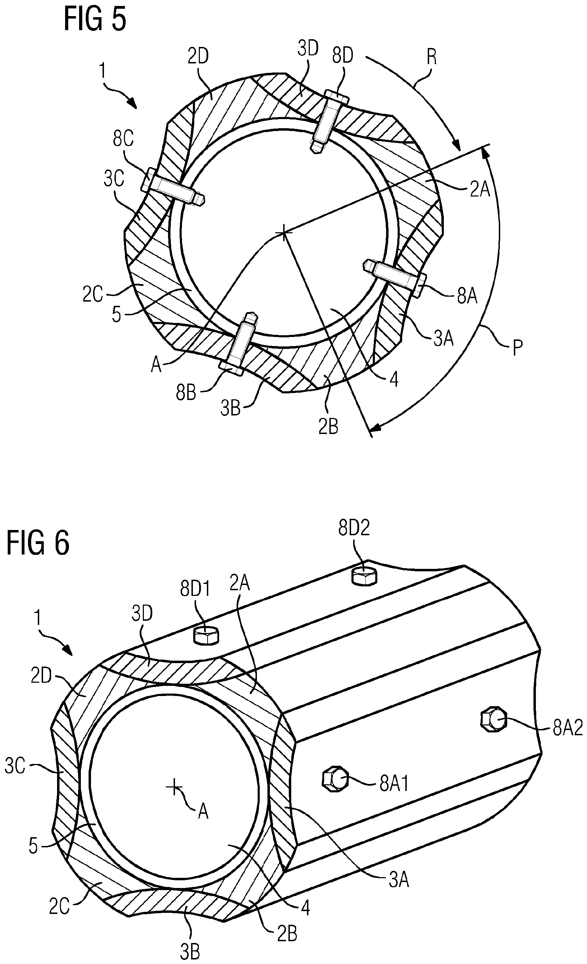

FIG 5 zeigt eine Ausgestaltung des Läufers 1, wobei die Bereiche 3A bis 3D mit jeweils einer Schraube 8A, 8B, 8C oder 8D pro Pol mit der Welle 4 verbunden sind.

In der Figur verbindet jeweils eine Schraube 8A bis 8D den jeweiligen Bereich 3A bis 3D mit der Welle 4.

Die Welle 4 kann als Hohlwelle ausgeführt sein.

In der Figur verbindet jeweils eine Schraube 8A bis 8D jeden Bereich 3A bis 3D mit dem darunterliegenden Bereich 5 und mit der Welle 4. Auf diese Weise wird auch jeder Bereich 2A bis 2D fixiert.

Jede Schraube 8A bis 8D ist in der Figur im Wesentlichen in der Mitte der Polteilung P angeordnet. Jede Schraube 8A bis 8D ist in der Figur jeweils im Wesentlichen mittig zwischen einem vorderen axialen Ende und einem hinteren axialen Ende der Welle angeordnet.

FIG 6 zeigt eine Ausgestaltung des Läufers 1, wobei die Bereiche 3A bis 3D mit zwei Schrauben pro Pol mit der Welle 4 verbunden sind.

Aus Darstellungsgründen werden in der Figur nur die Schrauben 8A1 und 8A2 (beim Bereich 3A) sowie 8D1 und 8D2 (beim Bereich 3D) gezeigt. Jedoch weisen vorzugsweise auch die Bereiche 3B und 3C jeweils zwei Schrauben auf.

In der Figur verbinden jeweils genau zwei Schrauben 8A1 bis 8D2 jeden Bereich 3A bis 3D mit der Welle 4.

Dadurch verbinden jeweils genau zwei Schrauben 8A1 bis 8D2 jeden Bereich 3A bis 3D mit dem darunterliegenden Bereich 5 und mit der Welle 4. Auf diese Weise wird auch jeder Bereich 2A bis 2D mit fixiert.

In der Figur ist beispielsweise die Schraube 8A1 im Wesentlichen am vorderen axialen Ende der Welle 4 angeordnet und die Schraube 8A2 im Wesentlichen am hinteren axialen Ende der Welle 4 angeordnet.

Es können auch drei oder mehr Schrauben zur Verbindung eingesetzt werden.

## Patentansprüche

1. Rotatorische dynamoelektrische Reluktanzmaschine (11), mit einer Rotationsrichtung (R) um eine Rotationsachse (A), wobei die Reluktanzmaschine (11) einen Läufer (1) aufweist, der in Rotationsrichtung (R) betrachtet Bereiche (2A...2D, 3A...3D) unterschiedlicher magnetischer Widerstände aufweist,
wobei von diesen Bereichen Bereiche (3A...3D) mit Material von einer ersten magnetischen Leitfähigkeit µr > 50 Pole mit der Polzahl 2p des Läufers ausbilden,
wobei diese Bereiche an amagnetischen Stoff mit µr < 5 angrenzen,
wobei sich die Polteilung in Rotationsrichtung (R) betrachtet von der Mitte eines Bereichs (2A...2D) mit einer gegenüber der ersten magnetischen Leitfähigkeit geringeren zweiten magnetischen Leitfähigkeit µr < 5 zur Mitte des nächsten Bereichs (2A...2D) mit der zweiten magnetischen Leitfähigkeit erstreckt, wobei eine Breite (B) der Bereiche (2A...2D) mit der zweiten magnetischen Leitfähigkeit in Rotationsrichtung (R) betrachtet zumindest an einer Oberfläche des Läufers (1) zwischen 1% und 50% der Polteilung (P) beträgt,
wobei eine radiale Tiefe (T) eines Pols wenigstens abschnittsweise mehr als 10% einer Länge eines Kreisbogens der Polteilung (P) entspricht,
**dadurch gekennzeichnet, dass** der Bereich (2A...2D) mit der zweiten magnetischen Leitfähigkeit zur Erhöhung eines Drehmoments der Reluktanzmaschine (11) permanentmagnetisches Material aufweist,
wobei das permanentmagnetische Material zur Erhöhung einer magnetischen Feldstärke im Luftspalt eine radiale Magnetisierung aufweist, und
wobei die rotatorische dynamoelektrische Reluktanzmaschine (11) durch die Ausgestaltung des Läufers (1) zwei Drehmomentkonstanten besitzt, die über einen Bestromungswinkel eingestellbar sind.

2. Reluktanzmaschine (11) nach Anspruch 1, wobei die zwei Drehmomentkonstanten mittels eines der rotatorischen dynamoelektrischen Reluktanzmaschine (11) vorgeschalteten Umrichters, eingestellbar sind.

3. Reluktanzmaschine (11) nach einem der Ansprüche 1 oder 2, wobei die rotatorische dynamoelektrische Reluktanzmaschine (11) durch die Ausgestaltung des Läufers (1) zwei Drehmomentmaxima besitzt, wobei ein erstes Drehmomentmaximum im Wesentlichen von der Reluktanzkraft der Reluktanzmaschine herrührt und wobei ein zweites Drehmomentmaximum im Wesentlichen von der Lorentzkraft herrührt, die von einem Läufer-Magnetfeld auf ein Ständerwicklungssystem wirkt.

4. Reluktanzmaschine (11) nach einem der Ansprüche 1 bis 3, wobei sich die Magnetkreise ergänzen und in Summe ein größeres Drehmoment bei gleichem Strom liefern.

5. Reluktanzmaschine (11) nach einem der Ansprüche 1 bis 4, wobei zwei parallele Magnetkreise erzeugbar sind und diese elektromagnetisch voneinander trennbar sind, wobei ein erster Magnetkreis den Ständer und wenigstens ein Flussleitstück umfasst und die Reluktanzkraft nutzt und wobei ein zweiter Magnetkreis den Ständer, permanentmagnetisches Material und einen optionalen Bereich zur Erreichung eines magnetischen Rückschlusses umfasst und die Lorentzkraft nutzt.

6. Reluktanzmaschine (11) nach einem der vorhergehenden Ansprüche, wobei die radiale Magnetisierung des permanentmagnetischen Materials zur Erhöhung des Drehmoments der Reluktanzmaschine (11) um einen Faktor 1,5 - 2 dient.

7. Reluktanzmaschine (11) nach einem der vorhergehenden Ansprüche, wobei sich ein weiterer Bereich (5) aufweisend ein Material einer ersten oder dritten magnetischen Leitfähigkeit (µr > 50) im Wesentlichen konzentrisch zur Rotationsachse (A) zur Erreichung eines magnetischen Rückschlusses erstreckt.

8. Reluktanzmaschine (11) nach einem der vorhergehenden Ansprüche, wobei die Bereiche (2A...2D, 3A...3D, 5) mit wenigstens einem Verbindungselement verbunden sind.

9. Reluktanzmaschine (11) nach einem der vorhergehenden Ansprüche, wobei das Verbindungselement als Schraube (8A...8D, 8A1...8D2) ausgebildet ist.

10. Reluktanzmaschine (11) nach einem der vorhergehenden Ansprüche, wobei die Bereiche (2A...2D, 3A...3D, 5) mittels Stoffschluss verbunden sind.

11. Reluktanzmaschine (11) nach einem der vorhergehenden Ansprüche, wobei die Bereiche (2A...2D, 3A...3D, 5) parallel zur Rotationsachse (A) angeordnet sind.

12. Reluktanzmaschine (11) nach einem der vorhergehenden Ansprüche, wobei die Bereiche (2A...2D, 3A...3D, 5) bezüglich der Rotationsachse (A) geschrägt angeordnet sind.

## Claims

1. Rotary dynamo-electric reluctance machine (11) having a direction of rotation (R) about an axis of rotation (A),
wherein the reluctance machine (11) comprises a rotor (1), which, viewed in the direction of rotation (R), comprises regions (2A...2D, 3A...3D) of differing magnetic resistance, wherein of these regions, regions (3A...3D) with material of a first magnetic conductivity µr > 50 form poles with the pole number 2p of the rotor,
wherein these regions border non-magnetic material with µr < 5,
wherein, viewed in the direction of rotation (R), the pole pitch extends from the centre of a region (2A...2D) with a second magnetic conductivity µr < 5 which is lower than the first magnetic conductivity to the centre of the next region (2A...2D) with the second magnetic conductivity, wherein, viewed in the direction of rotation (R), a width (B) of the regions (2A...2D) with the second magnetic conductivity is between 1% and 50% of the pole pitch (P) at least on a surface of the rotor (1),
wherein a radial depth (T) of a pole, which, at least in sections, corresponds to more than 10% of a length of an arc of the pole pitch (P),
**characterised in that**, to increase a torque of the reluctance machine (11), the region (2A...2D) with the second magnetic conductivity comprises permanent-magnetic material,
wherein to increase a magnetic field strength in the air gap, the permanent-magnetic material has radial magnetisation and wherein, due to the embodiment of the rotor (1), the rotary dynamo-electrical reluctance machine (11) has two torque constants, which can be adjusted via an energisation angle.

2. Reluctance machine (11) according to claim 1, wherein the two torque constants can be adjusted by means of an inverter arranged upstream of the rotary dynamo-electric reluctance machine (11).

3. Reluctance machine (11) according to one of claims 1 or 2, wherein, due to the embodiment of the rotor (1), the rotary dynamo-electric reluctance machine (11) has two torque maxima, wherein a first torque maximum substantially results from the reluctance force of the reluctance machine and wherein a second torque maximum substantially results from the Lorentz force which acts from a rotor magnetic field on a stator winding system.

4. Reluctance machine (11) according to one of claims 1 to 3, wherein the magnetic circuits complement each other and in total deliver a higher torque at the same current.

5. Reluctance machine (11) according to one of claims 1 to 4, wherein two parallel magnetic circuits can be generated and these can be separated from one another electromagnetically, wherein a first magnetic circuit includes the stator and at least one flux concentrating piece and uses the reluctance force and wherein a second magnetic circuit includes the stator, permanent-magnetic material and an optional region to achieve a magnetic yoke and uses the Lorentz force.

6. Reluctance machine (11) according to one of the preceding claims, wherein the radial magnetisation of the permanent-magnetic material serves to increase the torque of the reluctance machine (11) by a factor of 1.5 - 2.

7. Reluctance machine (11) according to one of the preceding claims, wherein a further region (5) comprising a material of a first or third magnetic conductivity (µr > 50) extends substantially concentrically to the axis of rotation (A) in order to achieve a magnetic yoke.

8. Reluctance machine (11) according to one of the preceding claims, wherein the regions (2A...2D, 3A...3D, 5) are connected to at least one connecting element.

9. Reluctance machine (11) according to one of the preceding claims, wherein the connecting element is embodied as a screw (8A...8D, 8A1...8D2).

10. Reluctance machine (11) according to one of the preceding claims, wherein the regions (2A...2D, 3A...3D, 5) are connected by means of a material connection.

11. Reluctance machine (11) according to one of the preceding claims, wherein the regions (2A...2D, 3A...3D, 5) are arranged parallel to the axis of rotation (A).

12. Reluctance machine (11) according to one of the preceding claims, wherein the regions (2A...2D, 3A...3D, 5) are arranged obliquely with respect to the axis of rotation (A).

## Revendications

1. Machine (11) à réluctance dynamo-électrique tournante, ayant un sens de rotation autour d'un axe (A) de rotation, la machine (11) à réluctance ayant un rotor (1) qui, considéré dans le sens (R) de rotation, a des parties (2A...2D, 3A...3D) de résistances magnétiques différentes,
dans laquelle de ces parties des parties (3A...3D) ayant du matériau d'une première conductivité magnétique µr > 50 constituent des pôles en le nombre polaire 2p du rotor,
dans laquelle ces parties sont voisines de matériau à magnétisme de µr < 5,
dans laquelle le pas polaire s'étend, considéré dans le sens (R) de rotation, du milieu d'une partie (2A...2D) , ayant une deuxième conductivité magnétique µr < 5 plus petite que la première conductivité magnétique, au milieu de la partie (2A...2D) suivante, ayant la deuxième conductivité magnétique,
dans laquelle une largeur (B) des parties (2A...2D) ayant la deuxième conductivité magnétique, considérée dans le sens (R) de rotation, représente, au moins sur une surface du rotor (1), entre 1% et 50 % du pas (P) polaire,
dans laquelle une profondeur (T) radiale d'un pôle correspond, au moins par endroit, à plus de 10% d'une longueur d'un arc de cercle du pas (P) polaire,
**caractérisée en ce que**
la partie (2A...2D) ayant la deuxième conductivité magnétique a, pour augmenter un couple de la machine (1) à réluctance, du matériau à magnétisme permanent,
dans laquelle le matériau à magnétisme permanent a, pour augmenter une intensité du champs magnétique dans l'entrefer, un aimantation radiale, et
dans laquelle la machine (1) à réluctance dynamoélectrique tournante possède, par la conformation du rotor (1), deux constantes de couple, qui sont réglables par l'intermédiaire d'un angle d'alimentation en courant.

2. Machine (11) à réluctance suivant la revendication 1, dans laquelle les deux constantes de couple sont réglables au moyen d'un convertisseur monté avant la machine (11) à réluctance dynamoélectrique tournante.

3. Machine (11) à réluctance suivant l'une des revendications 1 ou 2, dans laquelle la machine (11) à réluctance dynamoélectrique tournante possède, par la conformation du rotor (1), deux maximums de couple, un premier maximum de couple provenant essentiellement de la force de réluctance de la machine à réluctance et un deuxième maximum de couple provenant essentiellement de la force de Lorentz, qui agit par un champs magnétique rotorique sur un système d'enroulement statorique.

4. Machine (11) à réluctance suivant l'une des revendications 1 à 3, dans laquelle les circuits magnétiques se complètent et fournissent en somme un couple plus grand pour un même courant.

5. Machine (11) à réluctance suivant l'une des revendications 1 à 4, dans laquelle deux circuits magnétiques parallèles peuvent être produits et ceux-ci peuvent être séparés l'un de l'autre électromagnétiquement, dans laquelle un premier circuit magnétique comprend le stator et au moins une pièce de conduite du flux et utilise la force de réluctance et dans laquelle un deuxième circuit magnétique comprend le stator du matériau à magnétisme permanent et une partie éventuelle pour obtenir un reflux magnétique et utilise la force de Lorentz.

6. Machine (11) à réluctance suivant l'une des revendications précédentes, dans laquelle l'aimantation radiale du matériau à magnétisme permanent sert à augmenter le couple de la machine (11) à réluctance d'un facteur de 1,5 à 2.

7. Machine (11) à réluctance suivant l'une des revendications précédentes, dans laquelle une autre partie (5), ayant un matériau d'une première ou d'une troisième conductivité magnétique (µr > 50),s'étend sensiblement concentriquement à l'axe (A) de rotation pour obtenir un reflux magnétique.

8. Machine (11) à réluctance suivant l'une des revendications précédentes, dans laquelle les parties (2A...2D, 3A...3D, 5) sont reliées à au moins un élément de liaison.

9. Machine (11) à réluctance suivant l'une des revendications précédentes, dans laquelle l'élément de liaison est constitué sous la forme d'une vis (8A...8D, 8A1...8D2) .

10. Machine (11) à réluctance suivant l'une des revendications précédentes, dans laquelle les parties (2A...2D, 3A...3D, 5) sont reliées au moyen d'une coopération de matière.

11. Machine (11) à réluctance suivant l'une des revendications précédentes, dans laquelle les parties (2A...2D, 3A...3D, 5) sont disposées parallèlement à l'axe (A) de rotation.

12. Machine (11) à réluctance suivant l'une des revendications précédentes, dans laquelle les parties (2A...2D, 3A...3D, 5) sont disposées de manière inclinée par rapport à l'axe (A) de rotation.
